# DEMANDE DE BREVET EUROPEEN

(11) **EP 3 641 326 A1**
(43) Date de publication de la demande: **22.04.2020**
(21) Numéro de dépôt: 19204132.5
(22) Date de dépôt: 18.10.2019
(51) Int. Cl.: H04N 21/485, H04N 21/4722

(54) **DECODEUR TELEVISUEL AMELIORE**

(30) Priorité: 18.10.2018 FR 1859661
(71) Demandeur: Connected-Labs, 34980 Saint Gely du Fesc (FR)
(72) Inventeur: VERDIE, Jean-Charles, 34980 Saint Gély du Fesc (FR); REBOUL, Joël, 34980 Saint Gély du Fesc (FR)
(74) Mandataire: Cabinet Netter

(57) **Abrégé**

Un décodeur télévisuel comprend une entrée (4) agencée pour recevoir un ou plusieurs flux de données audiovidéo, une sortie (6) pour émettre un signal audiovidéo correspondant à un flux de données audiovidéo reçu à l'entrée (4), une interface de commande (10) agencée pour recevoir des commandes d'interaction avec le décodeur, un pilote (8) agencé pour recevoir une commande via l'interface de commande (10) et pour exécuter une action correspondante, et un moteur de reconnaissance (12) agencé pour analyser un flux de données audiovidéo reçu à l'entrée (4) et pour déterminer des données de contenu associées. Le pilote (8) est agencé, en présence d'une commande indiquant une action de changement de volume, pour commander sur la sortie (6) l'affichage d'informations d'interaction associées à des données de contenu déterminées par le moteur de reconnaissance (12).

## Description

L'invention concerne le domaine des décodeurs télévisuels également appelés set-top-box en anglais.

La consommation de programmes télévisuels a évolué avec l'arrivée de la télévision par satellite, puis avec l'avènement de la télévision par Internet. Ces nouveaux modes de distribution des flux télévisuels se sont accompagnés de l'essor des dispositifs appelés décodeurs télévisuels.

Ces dispositifs sont classiquement mis en œuvre sous la forme d'un boîtier décodeur qui transforme un signal externe en un contenu qui est mis à disposition sur une sortie pour un affichage sur un écran. Typiquement, le signal externe peut provenir d'une antenne satellite, d'une ligne téléphonique d'une fibre optique, d'un stockage de masse comme une clé USB ou un disque dur, d'un câble Ethernet, etc.

Bien que présents dans tous les foyers modernes et étant connectés à l'Internet, les décodeurs télévisuels sont pourtant restés à un stade d'utilisation extrêmement classique qui exclut toute connectivité. En effet, leur interface se contente d'imiter les interfaces classiques d'une télévision ou d'un lecteur DVD ou blu-ray, sans profiter réellement de leur connexion au réseau. Cette recherche du maintien des interfaces anciennes est poussée à un tel point que les acteurs qui souhaitent offrir une expérience de type second écran développent en général des applications dédiées pour téléphone et/ou tablette et ne cherchent aucunement à offrir cette expérience depuis le décodeur télévisuel lui-même.

L'invention vient améliorer la situation. À cet effet, l'invention propose un décodeur télévisuel comprenant une entrée agencée pour recevoir un ou plusieurs flux de données audiovidéo, une sortie pour émettre un signal audiovidéo correspondant à un flux de données audiovidéo reçu à l'entrée, une interface de commande agencée pour recevoir des commandes d'interaction avec le décodeur, et un pilote agencé pour recevoir une commande via l'interface de commande et pour exécuter une action correspondante. Le dispositif comprend en outre un moteur de reconnaissance agencé pour analyser un flux de données audiovidéo reçu à l'entrée et pour déterminer des données de contenu associées, et le pilote est agencé, en présence d'une commande indiquant une action de changement de volume, pour commander sur la sortie l'affichage d'informations d'interaction associées à des données de contenu déterminées par le moteur de reconnaissance.

Ce dispositif est particulièrement avantageux car il propose pour la première fois d'offrir une réelle forme d'interactivité avec un programme qu'un utilisateur regarde à travers le décodeur télévisuel, sans faire appel à des ressources matérielles externes telles qu'une tablette.

Dans diverses variantes, le dispositif selon l'invention pourra présenter l'une ou plusieurs des caractéristiques suivantes :
- le pilote est en outre agencé, pendant une durée choisie après la détection par le pilote d'une commande indiquant une action de changement de volume, pour exécuter un programme de détection de commandes d'interaction correspondant à certaines au moins des informations d'interaction et pour exécuter une application d'interaction en réponse à une telle détection,
- le pilote est en outre agencé, en réponse à la détection d'une commande d'interaction, pour commander sur la sortie l'affichage d'une information de commande de retour en arrière,
- le pilote est en outre agencé, en présence d'une commande d'interaction, pour commander sur la sortie l'affichage du signal audiovidéo correspondant à un flux de données audiovidéo reçu à l'entrée dans une première zone d'affichage, et l'affichage de l'application d'interaction dans une deuxième zone d'affichage, et
- le pilote est en outre agencé pour commander sur la sortie l'affichage en plein écran de l'application d'interaction à l'expiration d'une durée choisie.

L'invention concerne également un procédé audiovisuel comprenant les opérations suivantes :
a) recevoir un ou plusieurs flux de données audiovidéo,
b) émettre un signal audiovidéo correspondant à un flux de données audiovidéo reçu à l'opération a)
c) recevoir des commandes d'interaction,
d) modifier le signal audiovidéo de l'opération b) en fonction de commandes reçues à l'opération c),
e) analyser un flux de données audiovidéo reçu à l'opération a), et déterminer des données de contenu associées,
l'opération d) comprenant, en réponse à la détection d'une commande indiquant une action de changement de volume à l'opération c), l'affichage d'informations d'interaction associées à des données de contenu déterminées à l'opération e).

Dans diverses variantes, le procédé selon l'invention pourra présenter l'une ou plusieurs des caractéristiques suivantes :
- le procédé comprend en outre les opérations suivantes :
   f) en réponse à la détection d'une commande indiquant une action de changement de volume à l'opération c), exécuter un programme de détection de commandes d'interaction correspondant à certaines au moins des informations d'interaction, et
   g) exécuter une application d'interaction en réponse à la détection d'une commande d'interaction,
- en réponse à la détection d'une commande d'interaction, l'opération d) comprend l'affichage d'une information de commande de retour en arrière,
- en réponse à la détection d'une commande d'interaction, l'opération d) comprend l'affichage dans une première zone du signal audiovidéo de l'opération b), et l'affichage dans une deuxième zone d'un signal audiovidéo correspondant à l'application d'interaction, et
- à l'expiration d'un délai choisi, l'opération d) comprend l'élargissement de la deuxième zone à tout l'affichage.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue schématique d'un dispositif selon l'invention dans son environnement ;
- la figure 2 représente un exemple de mise en œuvre d'une fonction mise en œuvre par le dispositif de la figure 1 ; et
- la figure 3 représente un exemple de mise en œuvre d'une fonction mise en œuvre par le décodeur de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

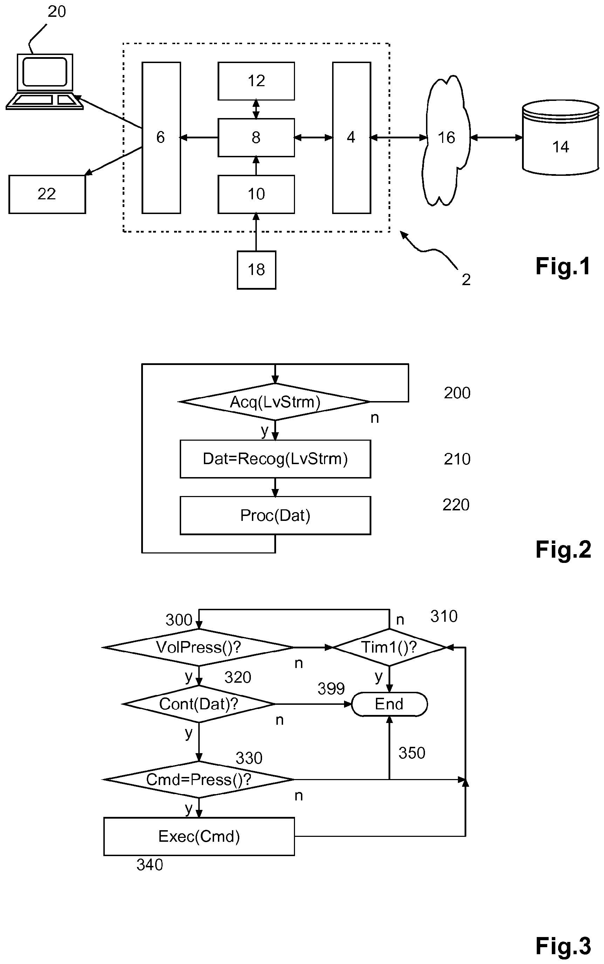

La figure 1 représente une vue schématique d'un décodeur télévisuel 2 selon l'invention dans son environnement.

Le décodeur télévisuel 2 comprend une entrée 4, une sortie 6, un pilote 8, une interface de commande 10 et un moteur de reconnaissance 12.

L'entrée 4 est agencée pour recevoir un ou plusieurs flux audiovidéo d'une source de flux 14. Dans l'exemple décrit ici, la source 14 est un serveur de télévision par IP, le réseau entre le serveur 14 et le décodeur télévisuel 2 étant désigné par la référence 16. En variante, la source 14 peut être un antenne satellite ou terrestre, ou encore un périphérique de stockage de masse comme un disque dur ou une clé USB, ou encore un service de vidéo à la demande (classique ou de type Netflix).

Le pilote 8 est réalisé au moyen d'un ou plusieurs processeurs. Par processeurs, il doit être compris tout processeur adapté aux calculs décrits plus bas. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée. Le pilote 8 a pour fonction la coordination des flux reçus à l'entrée 4, leur décodage pour émission à la sortie 6, les actions correspondant aux commandes reçues à l'interface de commande 10 et les interactions avec le moteur de reconnaissance 12 comme décrit plus bas.

L'interface de commande 10 est agencée pour recevoir des commandes d'une télécommande 18. L'interface de commande 10 peut être réalisée de toute manière adaptée, que ce soit par infrarouge ou par radiofréquence (par exemple par Bluetooth, Bluetooth BLE, Wifi ou autre) en direct ou via une application mobile. D'une manière générale, l'interface de commande 10 reçoit des signaux de commandes de la télécommande 18 et les transmet au pilote 8 pour leur exécution lorsque ces commandes correspondent à une interaction possible dans le contexte dans lequel elles ont été invoquées.

Le moteur de reconnaissance 12 est dans l'exemple décrit ici un programme mis en œuvre par le pilote 8. En variante, le moteur de reconnaissance 12 pourrait être mis en œuvre par un processeur distinct, le terme processeur devant être interprété comme décrit plus haut. Le moteur de reconnaissance 12 a pour fonction de détecter un contenu en cours de traitement par le décodeur 2 afin de lui associer des données de contenu permettant d'enrichir l'expérience d'un utilisateur qui visionne ce contenu. Dans l'exemple décrit ici, le moteur de reconnaissance 12 est un moteur de reconnaissance sonore qui accède à une base de données externe afin d'identifier des données de contenus associées au flux audio en cours de décodage par le pilote 8. En variante, le moteur de reconnaissance 12 pourrait être intégralement réalisé au sein du décodeur 12, les données de contenu étant stockées localement. Toujours en variante, le moteur de reconnaissance 12 peut opérer comme un web service, et être une interface d'accès à un service entièrement déporté en vue de la reconnaissance de contenu et son association à des données de contenu. Enfin, le moteur de reconnaissance 12 pourrait réaliser la détection de contenu autrement que de manière sonore, par exemple en faisant une reconnaissance vidéo, ou en exploitant des marquages dans le flux.

La sortie 6 est agencée pour émettre un ou plusieurs signaux audiovidéo. Dans l'exemple décrit ici, la sortie 6 est reliée à un ordinateur portable 20 et à un écran de télévision 22. La connexion entre la sortie 6 et le ou les écrans peut être réalisée de toute manière appropriée, de manière filaire ou non, et selon tout standard de connexion existant (YUV, coaxial, HDMI, DisplayPort, etc.).

Comme cela va être décrit avec les figures 2 et 3, le décodeur télévisuel 2 utilise la détection de données de contenu associées au flux audiovidéo en cours de traitement, afin de permettre à un utilisateur d'enrichir son expérience lorsqu'il envoie une commande particulière, cette détection pouvant être permanente, programmée, ou sur commande. Cela permet de manière concrète d'enrichir l'expérience de l'utilisateur à la manière d'un « second écran », mais sans pour autant faire appel à un autre dispositif que le décodeur télévisuel 2.

La figure 2 représente un exemple de mise en œuvre d'une fonction d'association de données de contenu à un flux audiovidéo en cours de décodage.

Cette fonction est une boucle qui analyse en permanence le contenu en cours de décodage et cherche à déterminer des données de contenu correspondantes. Pour cela, dans une opération 200, une fonction Acq() détermine un échantillon LvStrm du flux audiovidéo en cours de décodage. L'échantillon LvStrm peut être un échantillon du flux audiovidéo non encore décodé ou un échantillon du signal à afficher via la sortie 6. Dans l'exemple décrit ici, il s'agit d'un échantillon audio d'une durée de 5 secondes, tel qu'il doit être émis à la sortie 6. La durée de l'échantillon pourra varier en fonction des algorithmes utilisés pour le décodage. Toujours en fonction de l'algorithme, le décodage peut être réalisé sur des échantillons séparés ou sur une fenêtre glissante. S'il n'y a pas de flux audiovidéo en cours de décodage, l'opération 200 est répétée jusqu'à l'apparition d'un flux audiovidéo.

Ensuite, dans une opération 210, une fonction Recog() appelle le moteur de reconnaissance 12 avec l'échantillon LvStrm. Le résultat de cette fonction est stocké dans des données de contenu Dat. Par exemple, si un programme en cours de visionnage est un concert, les données de contenu peuvent être l'auteur, l'interprète, le compositeur, et toutes les autres données relatives au concert qui est joué. Dans un autre exemple, si le programme en cours de visionnage est un film, les données de contenu peuvent être les informations relatives à la bande originale en cours de diffusion, ou d'autres informations du même type.

Une fois les données de contenu récupérées, une fonction Proc() est lancée dans une opération 220, puis la boucle reprend avec l'opération 200.

La figure 3 représente un exemple de mise en œuvre de la fonction Proc(). Dans cette fonction, des données de contenu Dat déterminées précédemment vont être utilisées afin d'enrichir l'expérience de l'utilisateur.

Pour cela, dans une opération 300, une fonction VolPress() détermine si une commande de type « changement de volume » est reçue à l'interface de commande 10. Il peut s'agir indifféremment des boutons Volume +, Volume - ou « muet ». Le choix d'une commande de changement de volume est particulièrement intéressant car il est relié à la détection de contenu sonore ou vidéo dans l'esprit de l'utilisateur. De plus, lorsqu'un utilisateur envoie une commande de changement de volume, il s'attend à ce que l'affichage soit modifié et qu'une information nouvelle lui soit apportée sur l'écran, typiquement le niveau de volume. Son attention est portée sur ce changement. Ainsi, il est également susceptible de mieux interagir avec les éléments d'interaction ajoutés dans le cadre de l'invention. Ainsi, le choix de la commande de changement de volume permet de mieux intégrer le cadre de l'interaction de l'utilisateur tout en l'associant à un contexte dans lequel celui-ci est plus réceptif à des interactions.

En outre, les commandes de changement de volume sont spécifiques en ce que, dans toutes les implémentations de décodeurs télévisuels existants, elles déclenchent une boucle pendant laquelle les commandes autres que celles de changement de volume (l'augmentation du volume, la diminution du volume ou la suppression du son i.e. le mode « muet ») sont purement et simplement ignorées par l'interface de commande 10. Dit autrement, lorsqu'un bouton de changement de volume est pressé, il existe une plage temporelle d'environ une demi-seconde à une seconde pendant laquelle la télécommande 18 est rendue quasi-inactive, sauf pour les boutons directement liés au volume. Cela signifie que, pendant cette plage, les boutons habituellement inactifs peuvent être alloués à d'autres interactions qui pourront être suggérées de manière visuelle, sans pour autant changer le fonctionnement du décodeur télévisuel dans tous les autres contextes. Ainsi, l'invention peut être mise en œuvre dans tous les décodeurs télévisuels existants sans modification de leurs télécommandes, des interactions déjà existantes, et sans changer l'expérience à laquelle l'utilisateur est habitué par ailleurs.

Lorsqu'une pression est détectée, une fonction Tim1() est exécutée dans une opération 310 afin de déterminer si le temps alloué à l'exécution de la fonction Proc() est écoulé. Si c'est le cas, alors la fonction se termine dans une opération 399 et un nouvel échantillon LvStrm est prélevé avec l'opération 200 de la figure 2.

Lorsqu'une commande de changement de volume est détectée, alors une fonction Cont() est exécutée dans une opération 320. La fonction Cont() reçoit les données de contenu Dat et détermine une liste d'interactions à proposer à l'utilisateur. Pour cela, la fonction Cont() appelle un ou plusieurs services d'interaction avec les données de contenu Dat afin de déterminer si ces derniers ont des données associées. Par exemple, le décodeur télévisuel 2 peut être connecté à un service de musique à la demande, un service de VOD et un service d'informations comme Wikipedia.

La fonction Cont() a pour rôle de contacter ces services avec les données de contenus Dat() afin de préparer une éventuelle interaction avec l'utilisateur en affichant à l'écran pour chaque service:
- une indication du service concerné et de l'action,
- une indication du contenu concerné sur le service, et
- un pictogramme du bouton de la télécommande 18 sur lequel appuyer pour déclencher ce service.

Typiquement, ce sont les boutons de couleur rouge, bleu, vert et jaune qui peuvent être attribués à cet effet. En variante, d'autres boutons peuvent être utilisés, par exemple du pavé numérique ou un affichage sur l'écran organisé pour de la navigation géographique (par exemple au moyen des flèches directionnelles et/ou du bouton OK).

Une fois cet affichage initialisé, une fonction Press() est exécutée dans une opération 330. La fonction Press() détermine si une commande est reçue qui correspond à une commande de changement de volume ou à l'un des boutons associés à un des services affichés.

Si c'est le cas, alors la commande correspondante est exécutée par une fonction Exec() dans une opération 340. Cette exécution peut être exécutée en quittant l'affichage courant, en introduisant une fenêtre de type Picture in Picture, ou en faisant passer l'affichage courant dans une fenêtre. Ainsi, l'utilisateur qui a pressé un bouton par erreur ou qui a changé d'avis peut avoir un moyen de revenir à l'affichage courant. Le passage en plein écran de l'application considérée peut être réalisé à l'expiration d'une durée choisie.

Après, ou si la fonction Press() ne détecte aucun appui pendant une durée choisie, alors la fonction Timl() est exécutée dans l'opération 310.

En variante, l'affichage de l'opération 320 peut être réalisé même si aucun contenu n'est détecté. Cela peut permettre d'offrir à l'utilisateur un raccourci pratique vers un service de musique à la demande ou de vidéo à la demande sans avoir à passer par un menu principal par exemple. Toujours en variante, la détermination des éléments à afficher en surimpression en plus des informations liées au volume peut être réalisée dans l'opération 210, de manière préalable au lancement de la fonction Proc(). L'opération 320 est alors une opération d'impression des services et contenus accessibles ainsi déterminés au préalable.

D'autres commandes pourraient être utilisées pour déclencher les interactions supplémentaires. Avantageusement, ces boutons devraient être associés à une boucle dans laquelle les autres boutons de la télécommande 18 sont ignorés, afin de faciliter l'intégration comme décrit plus haut.

Avantageusement, les services d'interaction pourront être ajoutés par l'utilisateur lui-même. Ainsi, dans un menu particulier, le pilote 8 permettra à l'utilisateur de choisir un service d'interaction qu'il souhaite utiliser. Une fois ce service sélectionné, un bouton lui sera affecté (automatiquement ou par l'utilisateur), et il sera ensuite appelé comme décrit plus haut.

## Revendications

1. Décodeur télévisuel comprenant une entrée (4) agencée pour recevoir un ou plusieurs flux de données audiovidéo, une sortie (6) pour émettre un signal audiovidéo correspondant à un flux de données audiovidéo reçu à l'entrée (4), une interface de commande (10) agencée pour recevoir des commandes d'interaction avec le décodeur, et un pilote (8) agencé pour recevoir une commande via l'interface de commande (10) et pour exécuter une action correspondante, **caractérisé en ce qu'**il comprend en outre un moteur de reconnaissance (12) agencé pour analyser un flux de données audiovidéo reçu à l'entrée (4) et pour déterminer des données de contenu associées, et **en ce que** le pilote (8) est agencé, en présence d'une commande indiquant une action de changement de volume, pour commander sur la sortie (6) l'affichage d'informations d'interaction associées à des données de contenu déterminées par le moteur de reconnaissance (12).

2. Dispositif selon la revendication 1, dans lequel le pilote (8) est en outre agencé, pendant une durée choisie après la détection par le pilote (8) d'une commande indiquant une action de changement de volume, pour exécuter un programme de détection de commandes d'interaction correspondant à certaines au moins des informations d'interaction et pour exécuter une application d'interaction en réponse à une telle détection.

3. Dispositif selon la revendication 2, dans lequel le pilote (8) est en outre agencé, en réponse à la détection d'une commande d'interaction, pour commander sur la sortie (6) l'affichage d'une information de commande de retour en arrière.

4. Dispositif selon la revendication 2 ou 3, dans lequel le pilote (8) est en outre agencé, en présence d'une commande d'interaction, pour commander sur la sortie (6) l'affichage du signal audiovidéo correspondant à un flux de données audiovidéo reçu à l'entrée (4) dans une première zone d'affichage, et l'affichage de l'application d'interaction dans une deuxième zone d'affichage.

5. Dispositif selon la revendication 4, dans lequel le pilote (8) est en outre agencé pour commander sur la sortie (6) l'affichage en plein écran de l'application d'interaction à l'expiration d'une durée choisie.

6. Procédé audiovisuel comprenant les opérations suivantes :
a) recevoir un ou plusieurs flux de données audiovidéo,
b) émettre un signal audiovidéo correspondant à un flux de données audiovidéo reçu à l'opération a)
c) recevoir des commandes d'interaction,
d) modifier le signal audiovidéo de l'opération b) en fonction de commandes reçues à l'opération c),
**caractérisé en ce qu'**il comprend en outre les opérations suivantes :
e) analyser un flux de données audiovidéo reçu à l'opération a), et déterminer des données de contenu associées
et ce que l'opération d) comprend, en réponse à la détection d'une commande indiquant une action de changement de volume à l'opération c), l'affichage d'informations d'interaction associées à des données de contenu déterminées à l'opération e).

7. Procédé selon la revendication 6, comprenant en outre les opérations suivantes :
f) en réponse à la détection d'une commande indiquant une action de changement de volume à l'opération c), exécuter un programme de détection de commandes d'interaction correspondant à certaines au moins des informations d'interaction, et
g) exécuter une application d'interaction en réponse à la détection d'une commande d'interaction.

8. Procédé selon la revendication 7, dans lequel, en réponse à la détection d'une commande d'interaction, l'opération d) comprend l'affichage d'une information de commande de retour en arrière.

9. Procédé selon la revendication 7 ou 8, dans lequel, en réponse à la détection d'une commande d'interaction, l'opération d) comprend l'affichage dans une première zone du signal audiovidéo de l'opération b), et l'affichage dans une deuxième zone d'un signal audiovidéo correspondant à l'application d'interaction.

10. Procédé selon la revendication 9, dans lequel, à l'expiration d'un délai choisi, l'opération d) comprend l'élargissement de la deuxième zone à tout l'affichage.
